# EUROPÄISCHE PATENTSCHRIFT

(11) **EP 2 504 732 B1**
(45) Veröffentlichungstag und Bekanntmachung des Hinweises auf die Patenterteilung: **25.12.2013**
(21) Anmeldenummer: 10784956.4
(22) Anmeldetag: 16.10.2010
(51) Int. Cl.: G02B 27/01, B60S 1/08, B62D 15/02

(54) **NUTZUNG DER OPTISCHEN ELEMENTE EINES HEAD-UP-DISPLAYS ZUR KAMERABASIERTEN REGEN- UND SCHMUTZ SENSORIK, FAHRERIDENTIFIKATION, MÜDIGKEITSERKENNUNG**
USE OF THE OPTICAL ELEMENTS OF A HEAD-UP DISPLAY FOR THE CAMERA-BASED RAIN AND DIRT SENSOR SYSTEM, DRIVER IDENTIFICATION OR FATIGUE DETECTION
UTILISATION DES ÉLÉMENTS OPTIQUES D'UN AFFICHAGE TÊTE-HAUTE PERMETTANT, GRÂCE À UNE CAMÉRA, DE DÉTECTER LA PLUIE ET LES SALISSURES, D'IDENTIFIER LE CONDUCTEUR, ET DE DÉTECTER LA PERTE DE VIGILANCE

(30) Priorität: 24.11.2009 DE 102009054194
(43) Veröffentlichungstag der Anmeldung: 03.10.2012
(73) Patentinhaber: Conti Temic Microelectronic GmbH, 90411 Nürnberg (DE)
(72) Erfinder: ROTHENHÄUSLER, Konrad, 88147 Achberg (DE)
(74) Vertreter: Bobbert, Christiana
(86) Internationale Anmeldenummer: PCT/DE2010/001219
(87) Internationale Veröffentlichungsnummer: WO 2011/063779

(56) Entgegenhaltungen:
- US-A1- 2005 073 396
- US-A1- 2008 111 075

## Beschreibung

Die Erfindung betrifft ein Fahrzeug mit einer Vorrichtung zur Erzeugung eines Head-up-Displays, also einer Vorrichtung zur Projektion von Informationen über die Windschutzscheibe in das Sichtfeld des Fahrers.

Head-up-Displays werden verwendet, um dem Fahrer Informationen ins Auge zu projizieren. Damit entfällt in einigen Fällen der Blick zu den Instrumenten (Tacho, Navigationsdisplay) und somit eine zusätzliche zeitintensive und anstrengende Akkomodation des Auges (dynamische Anpassung der Brechkraft des Auges). Der Projektionsstrahlengang des Head-up-Display in das Auge des Fahrers ist in den meisten Fällen adaptiv anzupassen an die Größe und die Position des Fahrers bzw. des definierten Augenbereichs (Eyebox).

Die DE 10 2004 031 311 A1 zeigt eine optische Vorrichtung zur Darstellung von Informationen auf einer Projektionsfläche mit einer Bild-Sensor-Matrix, auf der die Pupille eines Benutzers abgebildet werden kann.

Die US 2005/0073396 A1 zeigt ein Mehrzweckkamerasystem für ein Fahrzeug, mit dem durch Einsatz eines Spiegelelements unterschiedliche Sichtbereiche erfasst werden können.

Die US 2008/0111075 A1 zeigt einen lichtempfindlichen Sensor für den Automobilbereich mit den Merkmalen des Oberbegriffs des Anspruchs 1, der mittels eines speziellen Linsensystems eine fokussierte Abbildung eines Außenbereichs einer Windschutzscheibe für eine Erfassung von Wassertropfen ermöglicht.

Eine wesentliche Idee der Erfindung besteht darin, eine zusätzliche Kamera umfassend ein Fokussierelement und einen Bildsensor statisch oder dynamisch in den Strahlengang eines Head-up-Displays einzuführen. Als Fokussierelement kann beispielsweise eine Linse oder ein Objektiv dienen. Als Bildsensor wird vorzugsweise ein CMOS oder CCD-Chip verwendet.

Die Einführung der Kamera in das optische System des Head-up-Displays kann über einen Strahlteiler oder aber auch durch eine mechanisch eingeführte Kamera erfolgen welche sich z.B. auf einem Chopperrad befindet. Auch eine Klappspiegeleinkopplung vgl. mit einer Spiegelreflexkamera wäre denkbar. Die Kamera könnte sich auch statisch im Strahlengang befinden, wenn ein gewisser Bereich der Projektion des Head-up-Displays nicht genutzt werden muss. Die Kamera kann einer Handykamera entsprechen.

Ein wesentlicher Vorteil der Erfindung liegt darin, dass durch das Nutzen der optischen Elemente des Head-up-Displays für eine Kamera ohne großen konstruktiven Mehraufwand herausragende neue Funktionen realisierbar sind. Diese werden im Folgenden näher beschrieben.

Durch das Einbringen der Kamera in den Strahlengang kann ein kamerabasierter Regensensor realisiert werden. Erfidnungsgemäß wird das Fokussierelement der Kamera derart angeordnet, dass ein Bereich der Außenseite der Windschutzscheibe fokussiert auf dem Bildsensor abgebildet ist. Der abgebildete Bereich auf der Außenseite der Windschutzscheibe entspricht dem Bereich, durch den der virtuelle Strahlengang des Head-up-Displays verläuft.

Das optische System des Head-up-Displays wird also insbesondere genutzt, um eine relativ große Sensorfläche auf der Windschutzscheibe zur Regendetektion zu erhalten. Eine Auswertung der Kamerabilder erlaubt es, zuverlässig Regen oder Schmutzpartikel auf der Windschutzscheibe zu detektieren.

Bisherige Regensensoren sind im oberen Bereich der Windschutzscheibe angebracht und beobachten damit einen Scheibenausschnitt der nicht dem Teil der Windschutzscheibe entspricht, durch den der Fahrer eines Kraftfahrzeugs durch die Windschutzscheibe blickt. Lokale Wasserbenetzung (z.B. Spritzwasser aus einer Pfütze etc.) und Verschmutzungen im Sichtfeld des Fahrers, die nicht auch im Sichtfeld des Sensors vorhanden sind, kann der Sensor nicht erkennen. Bisherige Regensensoren haben eine verhältnismäßig kleine Sensorfläche von ca. 2,5cm² Größe, was eine sichere und schnelle Regendetektion einschränkt. Diese Regensensoren sind durch eine Aussparung im Schwarzdruck von außen sichtbar und stören teilweise das Fahrzeugdesign. Bisherige Regensensoren benötigen als alleinstehender Sensor Bauraum in einer beengten Zone des Fahrzeugs, zusätzliche Kommunikations- und Versorgungsleitungen sowie einen Scheibenausschnitt im Schwarzdruck der Windschutzscheibe (Footprint). Bisherige Regensensoren in Serienfahrzeugen sind mitunter störungsanfällig und verärgern durch falsches oder ausbleibendes Wischen den Fahrer des Kraftfahrzeugs.

Gegenüber herkömmlichen optoelektronischen oder kamerabasierten Regensensoren bietet eine erfindungsgemäße Regensensorik über die optischen Elemente eines Head-up-Displays große Vorteile. Die Sensorfläche befindet sich im Sichtfeld des Fahrers, der Sensor bleibt dabei vom Fahrer unbemerkt. Regen und Schmutz werden direkt in dem Bereich detektiert, der für den Fahrer entscheidend ist. Die Sensorfläche ist im Vergleich zu bestehenden Regensensorsystemen relativ groß. Damit ist eine schnellere und sichere Detektion möglich. Im Vergleich zu aktuell genutzten ca. 2,5 cm² Sensorfläche wird vom Head-up-Display zur Projektion eine Scheibenfläche von ca. 300 cm² abgedeckt.

Da von außen ist kein Sensor sichtbar ist, bietet die vorgestellte Lösung klare Designvorteile. Die Kameraelektronik kann in die Elektronik des Head-up-Displays integriert werden, was Kosten und Bauraum spart. Ein kamerabasierter Regensensor mit großem Sichtfeld auf der Windschutzscheibe kann die Probleme der bisherigen Regensensoren (z.B. Nieselregen) durch eine entsprechend höhere Pixelauflösung lösen und ermöglicht zudem noch viele weitere Funktionen wie beispielsweise die Erkennung von trockenem Schmutz.

Ein weiterer Vorteil ist die Möglichkeit zur Beurteilung des Wischergebnisses der Scheibenreinigungsanlage.

Der kamerabasierte Regensensor im Head-up-Display schaut nach oben und ist damit von Störfaktoren durch andere Verkehrsteilnehmer weitgehend geschützt.

Eine bevorzugte Weiterbildung der Erfindung besteht in der Kombination der Regen- und Schmutzerkennung auf der Windschutzscheibe mit einer gleichzeitigen Beobachtung des Augenbereichs des Fahrers mit einer Kamera. Hierfür ist eine bifokale Fokussiervorrichtung vorgesehen, welche beispielsweise nach dem Prinzip der refraktiven Wirkung einer partiell eingefügten planparallelen Platte im konvergenten Strahlengang arbeitet. Dadurch können zwei Objektebenen erreicht werden: ein Teil der Footprintfläche auf der Windschutzscheibe kann dazu verwendet werden um in einer ersten Objektebene Lichtreflexionen in den Regentropfen zu detektieren und den Scheibenwischer anzusteuern. Die zweite Objektebene ist der Augenbereich des Fahrers. Der Bildsensor liefert in einem ersten Teilbereich fokussierte Aufnahmen der Windschutzscheibenaußenseite und in einem zweiten Teilbereich fokussierte Aufnahmen des Augenbereichs des Fahrers. Bei letzerem fungiert die Windschutzscheibe als Spiegel. Der Strahlengang des Head-up-Displays wird in inverser Richtung genutzt. Der zweite Teilbereich des Bildsensors empfängt Lichtstrahlung aus der Eyebox (Augenbereich) des Fahrers und aufgrund der Anordnung des Fokussierelements können die Augen und die umgebenden Gesichtspartien des Fahrers aus den Kamerabildern erkannt und identifiziert werden. Eine Fahreridentifikation kann sich in vielfacher Weise als vorteilhaft erweisen (z.B. Freigabe der Zündung, Wegfahrsperre, Kindersicherung, Personalisierung von Sicherheits- und Komfortfunktionen).

Das System zur Fahreridentifikation kann zusätzlich über eine modulierte Lichtquelle unterstützt werden. Diese kann durch eine Spannungsmodulation der Innenraumbeleuchtung erfolgen. Somit kann der Fahrer vor dem Start des Fahrzeugs schnell und sicher erkannt werden.

Die Beobachtung des Augenbereichs des Fahrers kann auch zur Erkennung von Müdigkeit verwendet werden. In Kombination mit einer Spurerkennungsfunktion kann Müdigkeit als Ursache für ein Verlassen der Spur sicherer erkannt und durch angepasste Mitteilung (Vibration, akkustische Signale, Lichtimpuls der Innenraumbeleuchtung etc.) an den Fahrer eine Gefahrensituation entschärft werden.

Das Head-up-Display ist in der Lage Lichtmuster auf die Scheibe zu projizieren, diese Lichtmuster können in einer bevorzugten Ausführungsform beispielsweise zur Regenerkennung verwendet werden. Ebenfalls wird der Luftraum über der Windschutzscheibe vorteilhaft durch das Head-up-Display beleuchtet. Sollte eine zusätzliche Beleuchtung erforderlich sein, so könnte diese als IR Beleuchtung ausgeführt werden. Eine Beleuchtung des Scheibenausschnitts zur besseren Detektion von Regen oder Schmutz kann - falls erforderlich - durch das Head-up-Display getaktet erfolgen. Ein Teil des projizierten Lichts des Head-up-Display wird generell nach oben aus der Scheibe auskoppelt. Auch eine zusätzliche Einkopplung von IR-Licht ist denkbar, damit der Fahrer von dieser Scheibenbeleuchtung nicht gestört wird.

So kann die Regenerkennung durch ein zyklisches flächendeckendes Lichtsignal im nichtsichtbaren Wellenlängenbereich (z.B. infrarot) des Head-up-Display ausgeleuchtet werden. Genauso denkbar ist eine Ausleuchtung der Gesichtspartie (Eyebox) durch Infrarotes Licht. (z.B. als überlagerte Flächenprojektion einer zusätzlichen IR-Lichtquelle durch das Head-up-Display). So können während der Fahrt zyklisch die Augen des Fahrers beobachtet werden.

In einer bevorzugten Ausführungsform ist ein Polarisations-filter zumindest teilweise im Strahlengang zwischen dem optischen oder mechanischen Element und dem Bildsensor angeordnet.

Zur Optimierung der Augenbeobachtung kann, um Lichtstrahlung aus der Umgebung (von oben durch die Windschutzscheibe) in das Kamerasystem zu unterbinden, bevorzugt ein Polarisationsfilter vorgesehen sein, durch den die Lichtstrahlung absorbiert wird, die nicht über die Windschutzscheibe aus dem Fahrzeuginnenraum eingespiegelt wird.

Im Falle einer Beleuchtung der Außenseite der Windschutzscheibe zur Regenerkennung wird bei Verwendung keiner bevorzugten Polarisationsrichtung der Beleuchtung, nur ein sehr geringer Anteil der Lichtstrahlung an der geneigten Windschutzscheibe in den Augenbereich reflektiert. Noch geringer ist der reflektierte Anteil, wenn gezielt die Polarisationsrichtung zur Beleuchtung genutzt wird, welche von der Head-up-Display Lichtquelle bewusst vermieden wird. Ein maximaler Anteil des Lichts passiert so die Windschutzscheibe. Durch Regentropfen oder Schmutz total reflektiertes oder zurück gestreutes Licht dient so zur Regen- und Schmutzerkennung.

Bevorzugt erfolgt bei gleichzeitiger Beobachtung von Windschutzscheibenaußenseite und Augenbereich mit einer Kamera eine Beleuchtung der beiden Bereiche mittels eines Polarisationsfilters mit zwei Teilbereichen mit entgegengesetzten Polarisationsrichtungen und die Abbildung der beiden Bereiche (auf den Bildsensor erfolgt mittels eines weiteren Polarisationsfilters mit zwei Teilbereichen mit entgegengesetzten Polarisationsrichtungen.

Es wird also eine Kamera vorgeschlagen, deren Schärfentiefenbereich sich sowohl auf die Objektebene Windschutzscheibe als auch die Objektebene Eyebox erstreckt, wobei eine partielle Polarisationsfilterbeschichtung zwischen Objektiv und sensitiver Bildsensorfläche derart ausgelegt ist, dass die Polarisationsfilterwirkung für die definierten Bildbereiche (Eyebox und Windschutzscheibenbereich für Regenerkennung) umgekehrt sind. Durch eine gezielte Beleuchtung der Regensensoren mit entgegengesetzt polarisiertem Licht kann somit die Unterscheidung der mindestens zwei unterschiedlichen Objektebenen unterstützt werden, um einen sicheren Algorithmus zur Objekterkennung zu entwickeln. Auch ein Dynamisches Einfügen des oder der Polarisationsfilter ist denkbar, da beide Objekterkennungsprozesse nicht auf schnelle Erkennungsgeschwindigkeiten ausgelegt sein müssen. Ebenfalls denkbar ist eine Ausleuchtung der zur Regenerkennung vorgesehenen Windschutzscheibenfläche durch sichtbares Licht welches nicht oder bevorzugt entgegengesetzt polarisiert zur Eyebox-Lichtstrahlung ausgerichtet ist.

Die erforderliche Kamera kann zur Bestimmung des Umgebungslichts verwendet werden und wichtige Sensorinformationen für das Head-up-Display, Klimaanlage und Fahrzeugbeleuchtung liefern.

Der Sensor kann auch weitere Aufgaben übernehmen z.B. als Komunikationsschnittstelle zwischen Mensch und Fahrzeug. Anwendungen könnten z.B. das Öffnen des Fahrzeugs sein indem z.B. eine Karte mit aufgedrucktem Code auf den Windschutzscheibenfootprint des Head-up-Displays gelegt wird oder ein Fingerabdruck von der Kamera ausgewertet wird. Dies ist dadurch möglich, dass die Kamera auf die Windschutzscheibenaußenfläche fokussiert ist.

In einer vorteilhaften Ausgestaltung verfügt das Fahrzeug über mindestens einer der folgenden Assistenzfunktionen basierend auf einer Auswertung der Daten des Bildsensors: Fahrererkennung, Müdigkeitserkennung, Regen-/Schmutzerkennung.

Im Folgenden werden Ausführungsbeispiele und Zeichnungen beschrieben.
Fig. 1 zeigt den Strahlengang eines Head-up-Displays.
Fig. 2 zeigt zusätzlich den Strahlengang bei einer Abbildung auf einem Bildsensor über einen Strahlteiler.

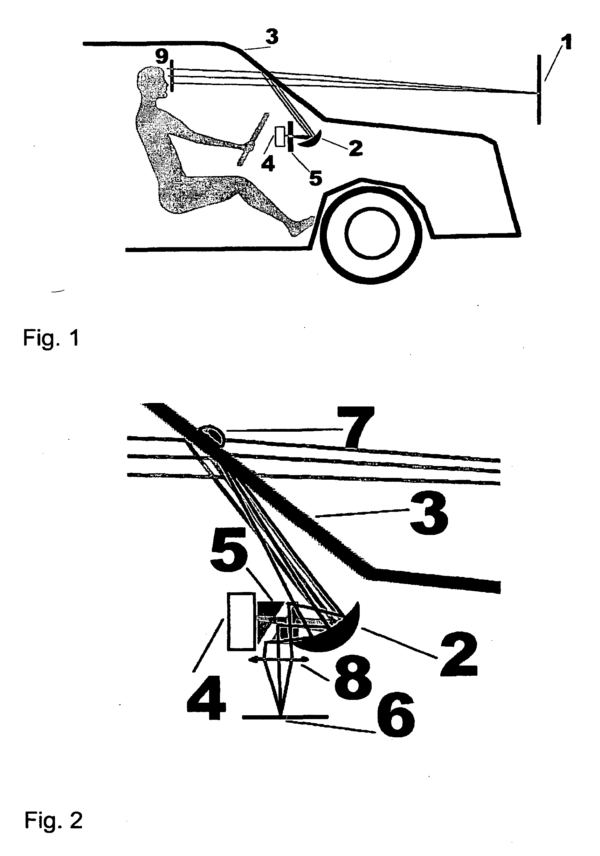

In Fig. 1 ist ein Fahrzeug mit einer Vorrichtung zur Erzeugung eines Head-up-Displays dargestellt. Eine Lichtquelle (4), auch Lichtemitter genannt, erzeugt die elektromagnetische Strahlung, die vom Fahrer als Anzeige (1) im Bereich vor der Windschutzscheibe wahrgenommen wird. Über einen Konkavspiegel (Umlenk- oder Freiformspiegel) (2) wird die Strahlung aufgeweitet und zur Windschutzscheibe (3) gelenkt. An der Windschutzscheibe (3) wird die Strahlung zum überwiegenden Teil ins Fahrzeuginnere reflektiert und trifft auf den Augenbereich des Fahrers (9). Der Fahrer sieht das virtuelle Bild (1) im Bereich vor der Windschutzscheibe.

Der in Fig. 1 dargestellte Bereich (5) zwischen Lichtquelle (4) und Umlenkspiegel (2) ist eine mögliche Einbauposition für ein zusätzliches optisches oder mechanisches Element (5) zur Strahlteilung oder Strahlumlenkung.

In Fig. 2 ist als zusätzliches optisches Element (5) ein Strahlteilerwürfel in den Strahlengang des Head-up-Displays nach Fig. 1 innerhalb des dort gezeigten Bereichs eingefügt worden. Unterhalb des Strahlteilerwürfels ist ein Fokussierelement (8) und ein Bildsensor (6) angeordnet. Ein Regentropfen (7), der sich auf der Windschutzscheibe (3) im Bereich des virtuellen Strahlengangs des Head-up-Displays befindet, wird über Umlenkspiegel (2) des Head-up-Displays und den Strahlteilerwürfel (5) von der Fokussiervorrichtung (8) auf den Bildsensor (6) abgebildet. Der Regentropfen (7) wird von einem kleinen Teil der elektromagnetischen Strahlung des Head-up-Displays beleuchtet, der nicht an der Windschutzscheibe (3) ins Fahrzeuginnere reflektiert wird. Die Fokussiervorrichtung (8) ist in diesem Ausführungsbeispiel derart eingestellt, dass der Bereich (7) der Außenseite der Windschutzscheibe (3), durch den der virtuelle Strahlengang des Head-up-Displays verläuft, fokussiert auf dem Bildsensor (6) abgebildet wird.

Aus den Bilddaten der Kamera (6, 8) kann das Vorliegen von Regentropfen (7) oder Schmutzpartikeln auf der Windschutzscheibe (3) erkannt werden und ein Signal zur Betätigung der Scheibenwischer oder eines Scheibenwaschprogramms generiert werden.

Vorteilhaft ist hierbei, dass der Regensensor nicht von außen sichtbar ist, obwohl der Bereich der Windschutzscheibe, in dem Regen oder Schmutzpartikel erkannt wird/werden, direkt im Sichtfeld des Fahrers liegt.

### Bezugszeichenliste

- 1: Virtuelles Bild
- 2: Konkavspiegel
- 3: Windschutzscheibe
- 4: Lichtquelle
- 5: optisches/mechanisches Element zur Strahlteilung/Strahlumlenkung
- 6: Bildsensor
- 7: Regentropfen auf der Windschutzscheibe im Bereich des virtuellen Strahlengangs des Head-Up-Displays
- 8: Fokussierelement
- 9: Augenbereich

## Patentansprüche

1. Fahrzeug mit einer Kamera umfassend einen Bildsensor (6) und ein Fokussierelement (8), wobei das Fokussierelement (8) derart angeordnet ist, dass ein Bereich (7) der Außenseite der Windschutzscheibe (3) fokussiert auf dem Bildsensor (6) abgebildet ist, **dadurch gekennzeichnet, dass** eine Vorrichtung (2, 3, 4) zur Erzeugung eines Head-Up-Displays vorhanden ist, welche dem Fahrer Informationen ins Auge projiziert, wobei die Kamera über ein optisches oder mechanisches Element (5) statisch oder dynamisch in den Projektionsstrahlengang des Head-Up-Displays eingeführt wird, wobei der Bereich (7) der Außenseite der Windschutzscheibe (3) durch das Nutzen von optischen Elementen (2) des Head-Up-Displays fokussiert auf dem Bildsensor (6) abgebildet ist, wobei der
abgebildete Bereich auf der Außenseite der Windschutzscheibe dem Bereich entspricht, durch den der virtuelle Strahlengang des Head-up-Displays verläuft.

2. Fahrzeug nach Anspruch 1, wobei das Fokussierelement (8) eine bifokale Abbildung ermöglicht, bei der der Augenbereich (9) des Fahrers auf einem ersten Teilbereich des Bildsensors (6) und ein Bereich (7) der Außenseite der Windschutzscheibe (3) auf einem zweiten Teilbereich des Bildsensors (6) fokussiert abgebildet ist.

3. Fahrzeug nach einem der Ansprüche 1 oder 2, wobei eine Beleuchtung des auf dem Bildsensor (6) abgebildeten Bereichs der Außenseite der Windschutzscheibe (3) oder des Augenbereich (9) des Fahrers im infraroten Wellenlängenbereich vorgesehen ist und der Bildsensor (6) Strahlung im infraroten Wellenlängenbereich detektieren kann.

4. Fahrzeug nach einem der vorgenannten Ansprüche, wobei ein Polarisationsfilter zumindest teilweise im Strahlengang zwischen dem optischen oder mechanischen Element (5) und dem Bildsensor (6) angeordnet ist.

5. Fahrzeug nach Anspruch 2, wobei eine Beleuchtung der beiden Bereiche (7, 9) mittels eines Polarisationsfilters mit zwei Teilbereichen mit entgegengesetzten Polarisationsrichtungen erfolgt und die Abbildung der beiden Bereiche (7, 9) auf den Bildsensor (6) mittels eines weiteren Polarisationsfilters mit zwei Teilbereichen mit entgegengesetzten Polarisationsrichtungen erfolgt.

6. Fahrzeug nach einem der vorgenannten Ansprüche mit mindestens einer der folgenden Assistenzfunktionen basierend auf einer Auswertung der Daten des Bildsensors (6): Fahrererkennung, Müdigkeitserkennung, Regen-/Schmutzerkennung.

## Claims

1. A vehicle having a camera comprising an image sensor (6) and a focusing element (8), wherein the focusing element (8) is arranged in such a manner that a region (7) of the outside of the windscreen (3) is imaged on the image sensor (6) in a focused manner, **characterised in that** an apparatus (2, 3, 4) for producing a heads-up display is provided, which projects information into the driver's eye, wherein the camera is statically or dynamically introduced into the projection beam path of the heads-up display via an optical or mechanical element (5), wherein the region (7) of the outside of the windscreen (3) is imaged on the image sensor (6) in a focused manner due to the use of optical elements (2) of the heads-up display, wherein the region of the outside of the windscreen being imaged corresponds to the region through which the virtual beam path of the heads-up display runs.

2. The vehicle according to Claim 1, wherein the focusing element (8) makes possible bifocal imaging, where the driver's eye region (9) is imaged on a first partial region of the image sensor (6) in a focused manner, and a region (7) of the outside of the windscreen (3) is imaged on a second partial region of the image sensor (6) in a focused manner.

3. The vehicle according to any one of Claims 1 or 2, wherein illumination of the region of the outside of the windscreen (3) imaged on the image sensor (6) or of the driver's eye region (9) is provided in the infrared wavelength range, and the image sensor (6) can detect radiation in the infrared wavelength range.

4. The vehicle according to any one of the preceding claims, wherein a polarising filter is arranged at least partially in the beam path between the optical or mechanical element (5) and the image sensor (6).

5. The vehicle according to Claim 2, wherein the two regions (7, 9) are illuminated by means of a polarising filter having two partial regions with opposite directions of polarisation, and the two regions (7, 9) are imaged onto the image sensor (6) by means of a further polarising filter having two partial regions with opposite directions of polarisation.

6. The vehicle according to any one of the preceding claims having at least one of the following assistance functions on the basis of evaluation of the data from the image sensor (6): driver recognition, fatigue detection, rain/dirt detection.

## Revendications

1. Véhicule avec une caméra comprenant un capteur d'images (6) et un élément de focalisation (8), l'élément de focalisation (8) étant disposé de telle sorte qu'une zone (7) du côté extérieur du parebrise (3) est reproduite de façon focalisée sur le capteur d'images (6), **caractérisé en ce qu'**il existe un dispositif (2, 3, 4) qui est destiné à produire un affichage tête haute et qui projette des informations dans l'oeil du conducteur, la caméra étant introduite, par le biais d'un élément (5) optique ou mécanique, de façon statique ou dynamique, dans le trajet des rayons de projection de l'affichage tête haute, la zone (7) du côté extérieur du parebrise (3) étant reproduite de façon focalisée sur le capteur d'images (6) par l'utilisation d'éléments optiques (2) de l'affichage tête haute,
la zone reproduite sur le côté extérieur du parebrise correspondant à la zone traversée par le trajet des rayons virtuel de l'affichage tête haute.

2. Véhicule selon la revendication 1, l'élément de focalisation (8) permettant une représentation bifocale dans laquelle la zone des yeux (9) du conducteur est représentée de façon focalisée sur une première zone partielle du capteur d'images (6), et une zone (7) du côté extérieur du parebrise (3) est représentée de façon focalisée sur une deuxième zone partielle du capteur d'images (6).

3. Véhicule selon une des revendications 1 ou 2, un éclairage de la zone du côté extérieur du parebrise (3) qui est reproduite sur le capteur d'images (6) ou de la zone des yeux (9) du conducteur étant prévu dans la plage de longueur d'onde infrarouge, et le capteur d'images (6) pouvant détecter le rayonnement dans la plage de longueur d'onde infrarouge.

4. Véhicule selon une des revendications précitées, un filtre de polarisation étant disposé au moins partiellement sur le trajet des rayons entre l'élément (5) optique ou mécanique et le capteur d'images (6).

5. Véhicule selon la revendication 2, un éclairage des deux zones (7, 9) s'effectuant au moyen d'un filtre de polarisation avec deux zones partielles avec des directions de polarisation opposées, et la reproduction des deux zones (7, 9) sur le capteur d'images (6) s'effectuant au moyen d'un autre filtre de polarisation avec deux zones partielles avec des directions de polarisation opposées.

6. Véhicule selon une des revendications précitées avec au moins une des fonctions d'assistance suivantes basées sur une analyse des données du capteur d'images (6) : identification du conducteur, détection de somnolence, détection de pluie/de saleté.
